# FASCICULE DE BREVET EUROPEEN

(11) **EP 0 647 598 B1**
(45) Date de publication et mention de la délivrance du brevet: **26.05.1999**
(21) Numéro de dépôt: 94402247.4
(22) Date de dépôt: 06.10.1994
(51) Int. Cl.: C03B 5/02, C03B 5/00, B09B 3/00

(54) **Procédé d'incinération et de vitrification de déchets dans un creuset**
Verfahren zum Verbrennen und Verglasen von Abfall in einer Hafen
Method for burning and vitrifying of waste in a pot

(30) Priorité: 08.10.1993 FR 9312020
(43) Date de publication de la demande: 12.04.1995
(73) Titulaire: COMMISSARIAT A L'ENERGIE ATOMIQUE, 75015 Paris (FR); COMPAGNIE GENERALE DES MATIERES NUCLEAIRES, 78140 Vélizy Villacoublay (FR)
(72) Inventeur: Boen, Roger, F-30130 Saint-Alexandre (FR); Cartier, René, F-84130 Le Pontet (FR); Taupiac, Jean-Pierre, F-58000 Nevers (FR); Baronnet, Jean-Marie, F-87000 Limoges (FR)
(74) Mandataire: Dubois-Chabert, Guy

(56) Documents cités:
- EP-A- 0 269 604
- EP-A- 0 312 044
- EP-A- 0 349 405
- EP-A- 0 369 642
- EP-A- 0 398 699
- FR-A- 2 388 594
- GB-A- 2 140 902
- US-A- 3 917 479
- US-A- 4 801 435

## Description

L'invention concerne un procédé d'incinération et de vitrification de déchets dans un creuset.

Les déchets minéraux ou incinérables dont les charges minérales sont parfois riches en certains métaux lourds très toxiques ou radioactifs, sont souvent traités en les chauffant par une torche à plasma à une température telle qu'ils fondent et se vitrifient, et forment ensuite un bloc compact de verre où les corps dangereux sont enrobés. Le bloc est alors recyclé ou entreposé sans danger. C'est donc un procédé commode et sûr qui est appelé à se développer. De plus, les déchets organiques qui peuvent être mélangés aux déchets minéraux sont normalement vaporisés et leurs molécules craquent, ce qui les transforme en gaz simples qu'on peut encore traiter facilement, en les filtrant et en les neutralisant par exemple.

Plusieurs modes concrets de réalisation ont été proposés, mais ils pèchent en certains points. C'est ainsi que des creusets existants (voir par exemple US-A-3 917 479) sont souvent construits en matériaux réfractaires, dont un grand avantage est qu'ils sont insensibles aux produits corrosifs, tels que l'acide chlorhydrique, qui proviennent de la vaporisation des déchets organiques. Mais on constate que ces creusets s'usent rapidement au contact du verre fondu, et que de plus ils retiennent si bien la chaleur qui est produite en leur sein qu'il faut bientôt limiter le débit de la source et ainsi ralentir la capacité de traitement. Le cuivre, aussi proposé comme matière de construction du creuset, possède le même inconvénient d'être sensible à la corrosion.

De plus, dans un bon nombre de conceptions le creuset est tournant afin que le verre fondu soit soumis aux forces centrifuges et repoussé contre la paroi latérale pendant le chauffage. La raison est que le creuset est percé au centre et que la coulée consécutive au chauffage est produite en arrêtant le creuset. Mais il est dispendieux d'équiper le creuset de joints tournants pour l'alimenter en réfrigérant et en électricité. Enfin, on constate que le craquage des gaz est assez difficile. L'invention a pour objet un procédé qui évite ces divers inconvénients et est associé à un creuset simple et de faible coût, protégé de la corrosion par le verre ou d'autres produits résultant de la combustion, tels que les gaz organiques dégagés.

Ainsi l'invention propose un procédé selon la revendication 1.

La chaleur est facilement évacuée par la paroi et le liquide de refroidissement, ce qui permet de jeter dans le creuset des déchets minéraux ou incinérables à pouvoir calorifique élevé. L'oxygène pur permet une combustion rapide sans produire par exemple de l'oxyde d'azote, contrairement aux procédés existants où de l'air est usuellement injecté. Le procédé est donc économique en gaz plasmagène, ce qui permet, en combinaison à la bonne évacuation de chaleur, de traiter les déchets à gros débit.

L'invention va maintenant être décrite à l'aide des figures suivantes, qui sont annexées à titre illustratif et non limitatif :
- la figure 1 représente un creuset conforme à l'invention, et
- la figure 2 représente partiellement un autre creuset.

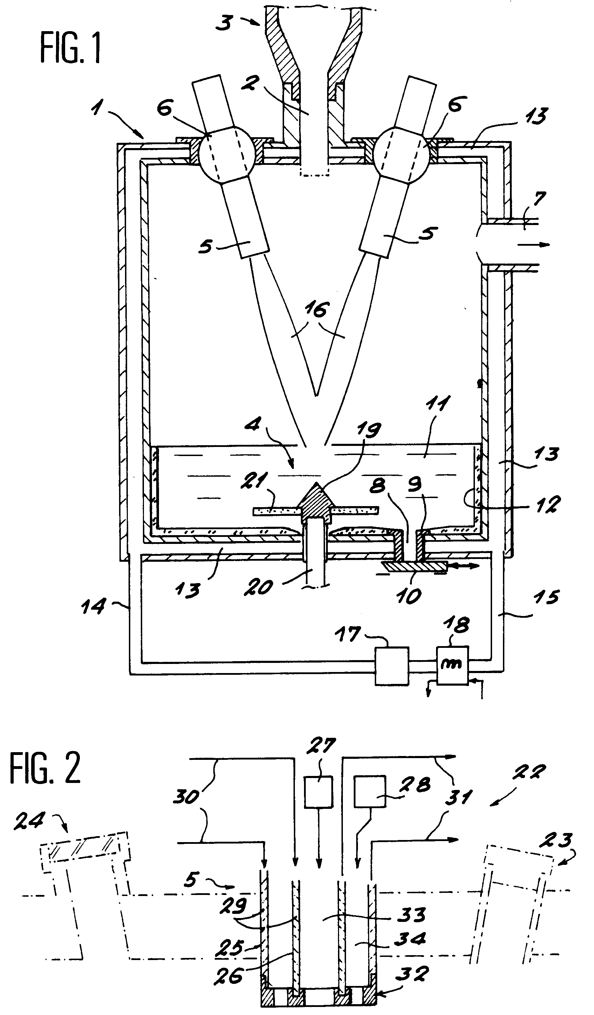

Le creuset de la figure 1 est en forme de réservoir sensiblement clos et cylindrique qui comprend une paroi 1 enveloppante percée au sommet d'une ouverture d'arrivée 2 des déchets, raccordée à une trémie 3, et qui surplombe une électrode 4 située sur le fond du creuset. Deux torches 5 à plasma d'oxygène traversent le sommet de la paroi de part et d'autre de l'ouverture d'arrivée 2 et sont mobiles en orientation grâce à des rotules 6 enchâssées dans la paroi 1. De plus, les torches 5 coulissent dans les rotules 6 pour être enfoncées à volonté dans le creuset.

La paroi latérale est percée d'un orifice de sortie des gaz 7. Le fond est muni d'un trou de coulée 8 entouré d'un manchon 9 et qui peut être fermé par une lame coulissante 10 située sous le creuset 1. Le manchon 9 peut être garni d'une résistance chauffante pour fondre un bouchon de verre solidifié qui obstruerait le trou de coulée 8 ; le manchon 9 peut aussi être plein et en métal bon conducteur de la chaleur pour obtenir cet effet, et la lame coulissante 10 peut quant à elle être munie de moyens de refroidissement pour former plus rapidement un tel bouchon solidifié quand elle est remise en place pour arrêter la coulée. La demande de brevet 93 05079 décrit quelques réalisations plus complètement. Ce genre de vanne s'est révélé efficace pour fermer sûrement le trou de coulée 8. Il est donc inutile de faire tourner le creuset pour écarter par centrifugation la matière fondue d'un trou de coulée central toujours ouvert.

Le bain de verre fondu 11 emplit le fond du creuset 1 et recouvre l'électrode 4. Sa couche 12 touchant la paroi est toutefois figée et ne l'attaque donc pas. En effet, des canaux 13 parcourus de liquide réfrigérant sont creusés dans toute la paroi 1 du creuset. Il peut s'agir d'un réseau de canaux verticaux dans la paroi latérale et parallèles entre eux dans le fond et le sommet, qui se raccordent à une canalisation d'alimentation 14 et à une canalisation d'évacuation 15, ces canalisations étant reliées entre elles en boucle par une pompe 17 et un échangeur de chaleur, pour assurer une circulation forcée et l'équilibre thermique du liquide réfrigérant. Les torches 5 émettent des faisceaux de plasma 16 vers l'électrode 4.

Celle-ci est composée d'une chandelle 19 de molybdène montée sur un mât 20 traversant la paroi 1 du creuset et engagée dans un perçage central d'un disque de graphite 21. Comme la paroi 1, le mât 20 est en acier inoxydable.

On représente sur la figure 2 une autre réalisation, qui comprend cette fois une torche unique à plasma 22 coulissant dans un perçage central du sommet du creuset, c'est-à-dire à l'emplacement de l'ouverture d' arrivée 2 des déchets de l'autre réalisation. L'ouverture d'arrivée, maintenant référencée par 23, s'étend de côté, sensiblement à l'emplacement d'une des rotules 6 de l'autre réalisation, et il est possible de compléter ce creuset par un hublot de visée 24, orienté vers l'électrode, et sensiblement à l'emplacement de l'autre rotule 6. Ici, il n'est pas prévu que la torche 22 puisse être orientée mais il est toujours possible de l'enfoncer plus ou moins dans le creuset. Les autres détails de réalisation ne sont pas modifiés par rapport à la figure 1 et ne sont pas représentés.

Dans les deux cas, les gaz de sortie peuvent être traités en les refroidissant par un échangeur de chaleur, puis en les filtrant et en les neutralisant.

On va maintenant décrire concrètement un mode de déroulement du procédé, mais pour cela il est utile de décrire plus en détail la constitution d'une torche 5 ou 22.

On trouve principalement un manchon externe 25 et un manchon interne 26 qui sont concentriques. Le conduit central 33 délimité par le manchon interne 26 est alimenté en gaz plasmagène par une source 27, et le conduit annulaire 34 entre les deux manchons 25 et 26 est alimenté en gaz de gainage du plasma par une source additionnelle 28. Les manchons 25 et 26 sont creusés eux aussi de canaux de refroidissement 29 connectés à une paire de conduits d'alimentation 30 et à une paire de conduits d'évacuation 31, et le bout de la torche 5 ou 22 est protégé par une bague isolante 32 en carbure de bore, qui est cependant évidée pour laisser les gaz plasmagène et de gainage sortir.

Pour amorcer le plasma, on commence par injecter 15 Nl/mn d'argon dans le conduit central 33 de la torche 5 ou 22, qui a été mise à un potentiel électrique lui faisant jouer le rôle de cathode, 5 Nl/mn d'argon dans le conduit de gainage 34, et 30 Nl/mn d'argon dans le hublot de visée 24. Tous les orifices ménagés à travers l'appareil sont le siège d'injections de gaz inerte pour éviter qu'ils ne s'échauffent excessivement et pour protéger l'extérieur de la sortie de poussières éventuelles, polluantes ou dangereuses. Le choix de l'argon au lieu d'oxygène pour cette étape préliminaire est dû à ce qu'il n'oxyde pas la chandelle 19, qui est alors exposée car le creuset est vide.

La pointe de cathode est approchée à quelques millimètres de la chandelle 19 et une tension à vide de l'ordre de 300 volts environ est appliquée entre l'électrode 4 et la toche 5 ou 22. L'arc électrique est amorcé par une décharge, et la cathode est éloignée de la chandelle 19 jusqu'à la longueur d'arc désirée. L'intensité du courant est fixée à 250 ampères. Les débits de gaz sont alors ajustés à 30 Nl/mn d'argon dans le conduit central 33 et 15 Nl/mn dans le conduit de gainage 34. La longueur d'arc est amenée à 145 mm en reculant la torche 5 ou 22, et la tension devient 80 volts environ. Après vingt minutes l'équilibre thermique est atteint, et l'introduction de déchets dans le creuset commence. Au bout d'un quart d'heure, l'électrode 4 est recouverte, et la tension d'arc, qui a augmenté dès l'introduction des déchets, dépasse 100 volts sans modification du réglage. L'arc est alors transféré sur les déchets, qui se vitrifient au pied de l'arc, puis la zone fondue se propage à tous les déchets hormis la couche figée sur la paroi 1.

La tension d'arc atteint 175 volts lorsque 15 Nl/mn d'oxygène sont injectés en remplacement d'un même débit d'argon dans le conduit de gainage 34. La puissance électrique est alors de 55 kW pour un débit moyen de charge de déchets de 3,5 kg à l'heure. L'oxygène a pour effet d'augmenter la tension d'arc donc la puissance électrique, la température du bain de verre et sa conductivité électrique ; ainsi d'une part il stabilise la colonne de plasma sur le bain de verre et d'autre part oxyde les métaux volatils tels que les chlorures qui pourraient se vaporiser. Il faut remarquer que le système n'a que peu d'inertie thermique, car l'abaissement du débit d'oxygène entraîne presque immédiatement une diminution de la tension d'arc ou de la puissance électrique et des transferts thermiques.

Lorsque la totalité de la charge a été fondue, on repasse sous plasma d'argon, la tension tombe alors à 110 volts et, pour compenser cette baisse de puissance, l'intensité est augmentée à 450 ampères afin d'éviter un refroidissement trop important du bain qui aurait pour conséquence une augmentation de la résistivité électrique du verre, ce qui pourrait se traduire par des accrochages parasites du pied d'arc sur les parois du four. Le plasma est ensuite arrêté et on laisse le bain de verre couler par la vanne et se refroidir.

L'argon est utilisé pour protéger les parties sensibles de l'appareil et aussi comme excipient à l'oxygène, pour maintenir un débit minimal de gaz à travers les torches 5 ou 22, faute de quoi elles ne fonctionneraient pas correctement. L'utilisation d'un supplément d'oxygène à la place de l'excipient peut produire une énergie et une température excessive pour le débit de vitrification souhaité et la résistance du creuset. Tout autre gaz neutre pourrait convenir comme excipient et comme gaz d'amorçage et serait de même sans influence sur les réactions de vitrification et autres. C'est pourquoi on parle de plasma d'oxygène sensiblement pur, le gaz neutre ne produisant qu'une atmosphère ou une faible puissance s'il est plasmagène.

La température à laquelle la paroi 1 est refroidie est de préférence choisie pour permettre à une couche de verre de se figer sur elle mais laisser les vapeurs produites par la vaporisation des déchets sortir du creuset sans se condenser sur la paroi 1, ce qui est important car ces vapeurs sont souvent corrosives : de l'acide chlorhydrique vaporisé est en particulier souvent rencontré. La combustion devrait cependant, espère-t-on, réduire sensiblement la production de vapeurs corrosives au profit d'oxydes moins délicats à traiter.

L'arc pourrait être établi entre des torches de polarités différentes. Il faudrait alors que la matière fondue s'étende dans cet espace intermédiaire.

Si on veut résumer l'invention, son but est d'assurer la vitrification de divers déchets organiques et minéraux à gros débit, ce qui implique la fourniture d'une puissance calorifique conséquente à laquelle le creuset doit résister, et la création de gaz qui peuvent être toxiques.

Le plasma d'oxygène fournit la puissance et rend les gaz dégagés inoffensifs ; le creuset en métal refroidi, bon conducteur thermique, permet d'évacuer la chaleur en excès tout en favorisant le figeage d'une couche de protection. Il est alors utile que le creuset soit stationnaire afin de ne pas compliquer le dispositif de refroidissement par des joints tournants ; la vanne permet d'atteindre ce but.

Le transfert ou passage de l'arc à travers un bain fondu de verre est un élément important de réussite du procédé. En traversant une profondeur non négligeable de matière vitrifiée pour atteindre l'électrode 4 et "reboucler" ainsi les courants électriques, l'arc lui cède efficacement sa chaleur, et le rendement du dispositif est donc satisfaisant. Il faut remarquer que les déchets envisagés ici sont généralement isolants de l'électricité aux basses températures, ce qui impose de prendre des mesures convenables pour amorcer la vitrification, telles que l'étape d'amorçage décrite plus haut, qui comporte un remplissage progressif du creuset par des déchets fondant au fur et à mesure et qui ne recouvrent pas l'électrode au début de l'amorçage, suivie de la marche en régime normal, dans laquelle une partie du débit d'argon est remplacée par de l'oxygène avec pour effets d'augmenter la puissance du plasma et de stabiliser l'arc. De plus, l'oxygène porté à très haute température détruit par oxydation la fraction organique des déchets introduits dans le creuset.

## Revendications

1. Procédé d'incinération et de vitrification de déchets minéraux et/ou organiques dans un creuset stationnaire au moyen d'une torche (5, 22) à plasma, caractérisé en ce qu'il consiste à utiliser au moins une torche (5, 22) à plasma d'oxygène (16) sensiblement pur dans ledit creuset stationnaire à paroi (1) d'acier inoxydable creusée de canaux d'écoulement (13) d'un liquide de refroidissement et à vanne de coulée (10), et en ce que le plasma est de type plasma d'arc transféré à travers un bain de verre fondu (11) dans lequel se rebouclent les courants électriques.

2. Procédé d'incinération et de vitrification de déchets minéraux et/ou organiques selon revendication 1, caractérisé en ce que le plasma d'oxygène est mêlé à un courant de gaz neutre, l'amorçage de l'arc entre la torche (5, 22) et l'électrode (4) située au fond du creuset étant effectué en utilisant le gaz neutre seul, l'oxygène étant substitué progressivement à une partie du gaz neutre pour atteindre le fonctionnement en régime normal.

3. Procédé d'incinération et de vitrification de déchets minéraux et/ou organiques suivant la revendication 1, caractérisé en ce que la paroi (1) est portée à une température inférieure à celle de figeage des déchets vitrifiés et supérieure à celle de condensation de vapeurs corrosives libérées.

4. Procédé d'incinération et de vitrification de déchets minéraux et/ou organiques suivant la revendication 1, caractérisé en ce que le plasma d'oxygène est mêlé à un courant de gaz neutre.

5. Procédé d'incinération et de vitrification de déchets minéraux et/ou organiques suivant la revendication 4, caractérisé en ce que du gaz neutre est soufflé à travers des orifices (24) ménagés à travers la paroi (1).

## Claims

1. Process for the incineration and vitrification of mineral and/or organic waste in a stationary crucible by means of a plasma torch (5, 22), characterized in that it consists of using at least one torch (5, 22) with a substantially pure oxygen plasma (16) in said stationary crucible having a stainless steel wall (1) provided with outflow channels (13) for a cooling liquid and a tapping valve (10) and in that the plasma is of the arc plasma type transferred through a molten glass bath (11) in which the electric currents are "wrapped round".

2. Process for the incineration and vitrification of mineral and/or organic waste according to claim 1, characterized in that the oxygen plasma is mixed with a neutral gas stream, the striking of the arc between the torch (5, 22) and the electrode (4) at the bottom of the crucible being carried out using the neutral gas only, the oxygen being progressively substituted for part of the neutral gas in order to obtain normal operation.

3. Process for the incineration and vitrification of mineral and/or organic waste according to claim 1, characterized in that the wall (1) is raised to a temperature below the solidification point of the vitrified waste and above the condensation point of the corrosive vapours given off.

4. Process for the incineration and vitrification of mineral and/or organic waste according to claim 1, characterized in that the oxygen plasma is mixed with a neutral gas stream.

5. Process for the incineration and vitrification of mineral and/or organic waste according to claim 4, characterized in that the neutral gas is blown through openings (24) made in the wall (1).

## Patentansprüche

1. Verfahren zum Verbrennen und Verglasen von mineralischen und/oder organischen Abfällen in einem stätionären Tiegel mittels eines Plasmabrenners (5, 22),
**dadurch gekennzeichnet,**
daß es darin besteht, wenigstens einen Brenner (5, 22) mit im wesentlichen reinem Sauerstoffplasma (16) in dem genannten stationären Tiegel zu benutzen, in dessen Wand (1) aus nichtoxidierbarem Stahl Strömungskanäle (13) für eine Kühlflüssigkeit vorgesehen sind und der mit einem Gießschieber (10) versehen ist, und dadurch, daß das Plasma ein Plasma des Typs ist, bei dem der Bogen durch ein Bad aus geschmolzenem Glas (11) übertragen wird, in dem die elektrischen Ströme eine Schleife bilden.

2. Verfahren zum Verbrennen und Verglasen von mineralischen und/oder organischen Abfällen nach Anspruch 1, dadurch gekennzeichnet, daß das Sauerstoffplasma mit einem Strom aus neutralem Gas gemischt wird, das Zünden des Bogens zwischen dem Brenner (5, 22) und der auf dem Boden des Tiegels befindlichen Elektrode (4) nur mit dem neutralen Gas erfolgt und der Sauerstoff dann progressiv einen Teil des neutralen Gases ersetzt, um den Normalbetrieb zu erreichen.

3. Verfahren zum Verbrennen und Verglasen von mineralischen und/oder organischen Abfällen nach Anspruch 1, dadurch gekennzeichnet, daß die Wand (1) auf eine Temperatur gebracht wird, die niedriger ist als die Erstarrungstemperatur der verglasten Abfälle und höher als die Kondensationstemperatur der freiwerdenden korrosiven Dämpfe.

4. Verfahren zum Verbrennen und Verglasen von mineralischen und/oder organischen Abfällen nach Anspruch 1, dadurch gekennzeichnet, daß das Sauerstoffplasma mit einem Strom aus neutralem Gas gemischt wird.

5. Verfahren zum Verbrennen und Verglasen von mineralischen und/oder organischen Abfällen nach Anspruch 1, dadurch gekennzeichnet, daß das neutrale Gas durch Öffnungen (24) geblasen wird, die in der Wand (1) vorgesehen sind.
